# EUROPEAN PATENT SPECIFICATION

(11) **EP 3 765 676 B1**
(45) Date of publication and mention of the grant of the patent: **25.10.2023**
(21) Application number: 18783379.3
(22) Date of filing: 25.09.2018
(51) Int. Cl.: E01H 1/04

(54) **MATERIAL COLLECTING EQUIPMENT**
MATERIALSAMMELVORRICHTUNG
ÉQUIPEMENT DE COLLECTE DE MATÉRIAU

(30) Priority: 16.03.2018 DE 102018002142
(43) Date of publication of application: 20.01.2021
(73) Proprietor: HUSQVARNA AB, 561 82 Huskvarna (SE)
(72) Inventor: KOHL, Peter, 89257 Illertissen (DE); SCHNEIDER, Thomas, 73571 Göggingen-Horn (DE)
(74) Representative: Finkele, Rolf
(86) International application number: PCT/EP2018/075883
(87) International publication number: WO 2019/174765

(56) References cited:
- DE-U1-202005 013 271
- GB-A- 2 175 482
- US-A1- 2006 070 194

## Description

### TECHNICAL FIELD

The present disclosure relates to a material collecting equipment with a stand.

### BACKGROUND

Hand-held material collecting equipment including, but not limited to, gardening equipment such as lawn movers and leaf collecting devices have been well known in the art. This hand-held material collecting devices typically include an implement portion, and a handle connected to the implement portion. In some cases, it has been known to provide a stand to the implement portion so that the material collecting equipment can be stored in a compact space having tight space constraints, for example, the material collecting equipment may be stored in an upright position.

However, it has also been noticed that although the stand has been provided in conventional designs of many material collecting equipment, these stands come in the way of the implement portion when the implement portion is operating. For instance, these stands may hinder smooth movement of a lawn mower, or a leaf collecting device during operation. As a result, these stands may negatively impact an efficiency of operation being carried out by a user.
**The patent application** US 2006/070194 A1 **discloses a lawn sweeper for collecting debris, whereby this lawn sweeper does provide for any legs for its vertical storage.**
**German utility model** DE 20 2005 013271 U1 **D2 discloses a wheelbarrow having a pair of spacers in front of a frame. Although the spacers are being construed as pair of legs they cannot provide appropriate support for the wheelbarrow to be stored vertically.**

As illustrated in above pictorial representation, majority of weight of the wheelbarrow is concentrated towards right in a vertical configuration. To be able to get support, gravitational force should vertically align with normal reaction force at contact point (i.e. spacers). However, as center of gravity of the wheelbarrow lies towards substantially right of the spacers, the wheelbarrow will topple towards front side and will not be stable.

Hence, there is a need for an improved material collecting equipment that overcomes the afore-mentioned drawbacks in which the material collecting equipment provides flexibility to a user in conveniently adapting the material collecting device between its operational and parked states.

### SUMMARY

In view of the above, it is an objective of the present invention to solve or at least reduce the drawbacks discussed above. The objective is at least partially achieved by a material collecting equipment, according to an embodiment of the present invention. According to an embodiment, the material collecting equipment is a lawn mower. According to another embodiment, the material collecting equipment may be a leaf collecting device.

The material collecting equipment includes a handle, an implement portion attached to the handle, and a pair of wheels rotatably connected to the implement portion. The implement portion has a fore surface that is adapted to define an arcuate groove parallel to the pair of wheels. A stand is slidably coupled to the arcuate groove. The stand includes a bar extending partway between the pair of wheels, and a locking element that is disposed on the bar to correspond with the arcuate groove. The locking element is selectively operable to adjust a position of the bar in relation to the handle. At least one leg is connected to the bar and disposed away from the implement portion to selectively facilitate a storage of the material collecting equipment.

According to an embodiment of the present invention, each leg from the pair of legs has a frusto-conical shape. Moreover, the pair of legs are equidistantly spaced from the locking element.

According to an embodiment of the present invention, the locking element includes a knob, and a stem that extends from the knob. The stem is disposed towards the arcuate groove and threadably engaged with the bar. A locking member is attached to a free end of the stem and slidably engaged with the arcuate groove. This way, when the knob is operably rotated against the bar, the locking member abuts with the arcuate groove to prevent relative motion between the stand and the handle.

According to an embodiment of the present invention, the arcuate groove has a first end proximal to the handle, and a second end distally located from the handle. When the locking element is positioned towards the first end of the arcuate groove, the material collecting equipment is rendered for use in operation. When the locking element is positioned towards the second end of the arcuate groove, the material collecting equipment is rendered in a parked state.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a side view of a material collecting equipment in a parked state, in accordance with an embodiment of the present invention;
**FIG. 2** shows a top perspective view of an implement portion having a stand, in accordance with an embodiment of the present invention;
**FIG. 3** shows a side sectional view of the material collecting equipment corresponding to the parked state of **FIG. 1****,** in accordance with an embodiment of the present invention;
**FIG. 4** shows a side view of the material collecting equipment in an operational state, in accordance with an embodiment of the present invention; and
**FIG. 5** shows a side sectional view of the material collecting equipment corresponding to the operational state of **FIG. 4****,** in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as being limited to the embodiments set forth herein; rather, these embodiments are provided so that this disclosure will be thorough and complete, and will fully convey the scope of the invention to those skilled in the art. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

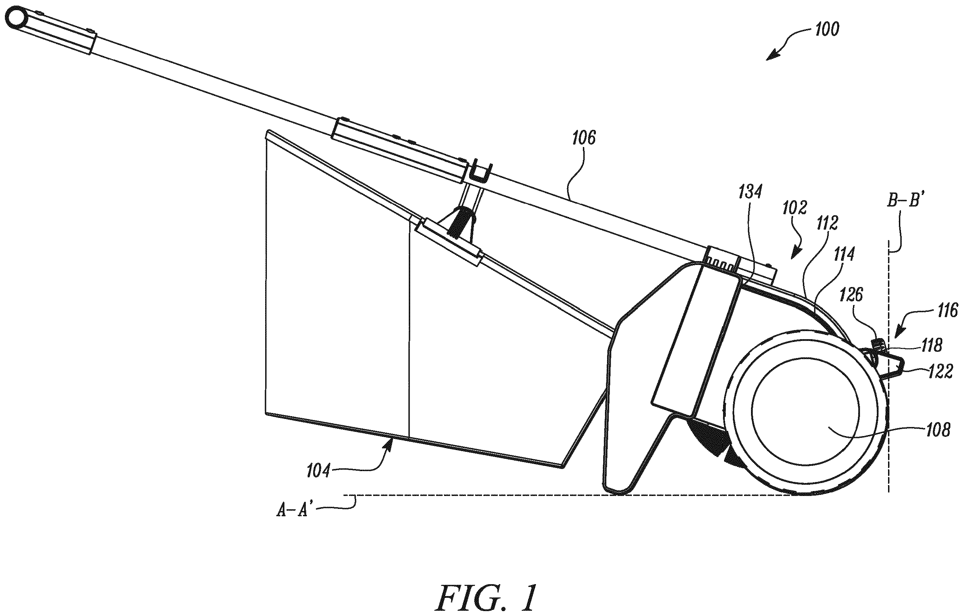

**FIG. 1** shows a side perspective view of a material collecting equipment **100** in a parked state, according to an embodiment of the present invention. In an embodiment as shown in **FIG. 1****,** the material collecting equipment **100** is a leaf collecting device. However, in other embodiments of the present invention, the material collecting equipment **100** may include a lawn mower, or other types of gardening equipment known to persons skilled in the art.

With continued reference to **FIG. 1****,** the material collecting equipment 100 has an implement portion **102,** and a storage compartment **104** in communication with the implement portion **102.** A handle **106** is further connected to the implement portion **102.**

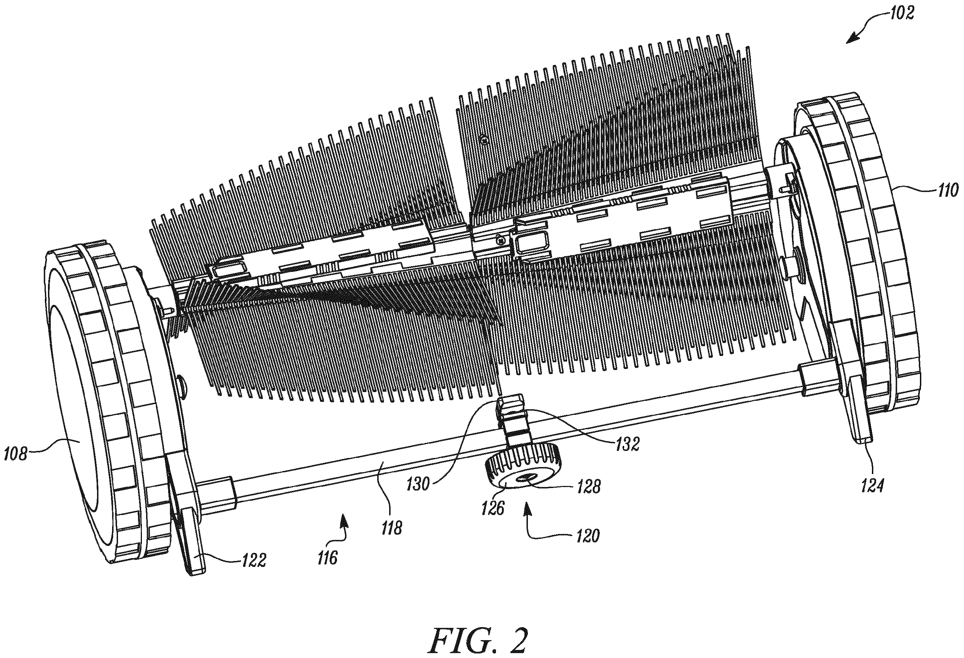

Further, referring to **FIGS. 1** and **2****,** a pair of wheels **108, 110** are rotatably connected to the implement portion **102.** The implement portion **102** has a fore surface **112** that is adapted to define an arcuate groove **114** parallel to the pair of wheels **108, 110.** A stand **116** is slidably coupled to the arcuate groove **114.** The stand **116** includes a bar **118** extending partway between the pair of wheels **108, 110.**

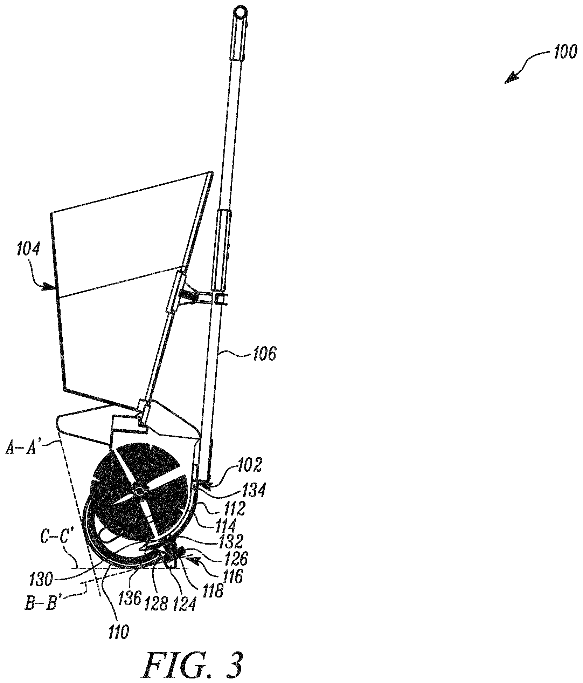

A locking element **120** is disposed on the bar **118** to correspond with the arcuate groove **114.** The locking element **120** is selectively operable to adjust a position of the bar **118** in relation to the handle **106.** At least one leg **122** is connected to the bar **118** and disposed away from the implement portion **102** to selectively facilitate a storage of the material collecting equipment **100** in a parked state as shown in **FIGS. 1** and **3****.** In the illustrated embodiment, the at least one leg includes a pair of legs **122, 124.** The at least one leg **122** may include any number of legs as suitable for application with various aspects of the present disclosure. In an embodiment, the at least one leg **122** includes only one leg 122.

In an embodiment as shown in **FIGS. 1** through **5****,** each leg from the pair of legs **122, 124** has a frusto-conical shape. However, the present disclosure is not limited by the shape of the pair of legs **122, 124** in any manner. The pair of legs **122, 124** may be shaped such that pair of legs **122, 124** may comply with space constraints while using or storing the material collecting equipment **100** most suitably. Moreover, the pair of legs **122, 124** are equidistantly spaced from the locking element **120.** The present disclosure is not limited by spacing between the pair of legs **122, 124** in any manner. The pair of legs **122, 124** may be non-equidistantly spaced from the locking element **120** as well.

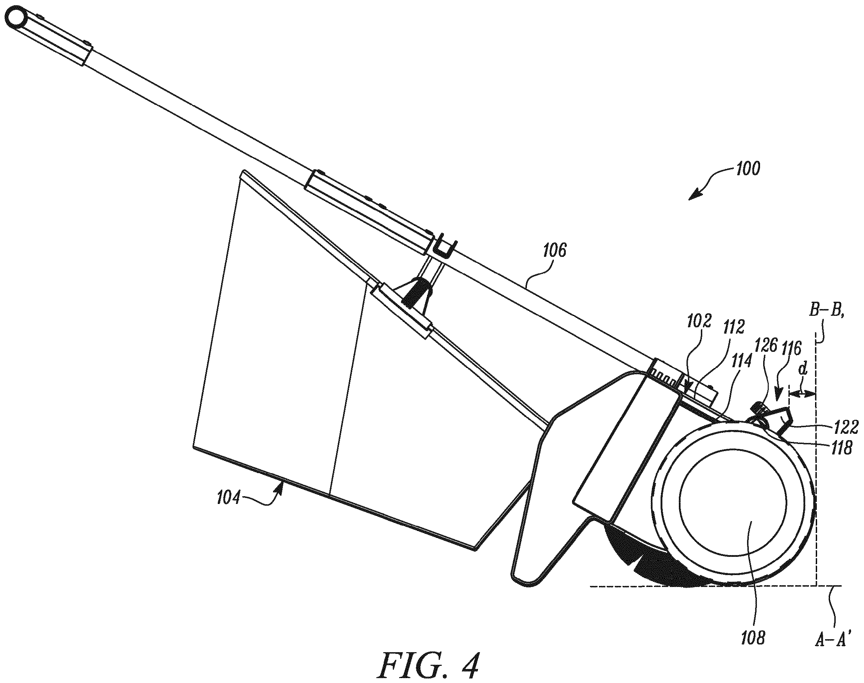

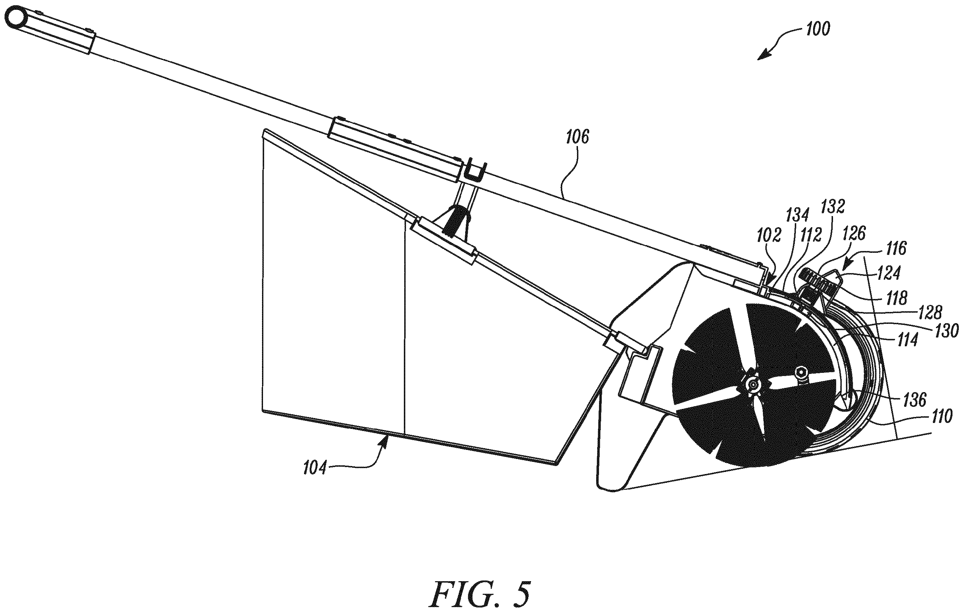

In an embodiment as shown in **FIGS. 4** and **5****,** the locking element **120** includes a knob **126,** and a stem **128** that extends from the knob **126.** The stem **128** is disposed towards the arcuate groove **114** and threadably engaged with the bar **118.** A locking member **130** is attached to a free end **132** of the stem **128** and slidably engaged with the arcuate groove **114.** This way, when the knob **126** is operatively rotated against the bar **118,** the locking member **130** abuts with the arcuate groove **114** as shown in **FIGS. 3** and **5** to prevent relative motion between the stand **116** and the handle **106.**

Also, as shown in **FIGS. 3** and **5****,** the arcuate groove **114** has a first end **134** proximal to the handle **106,** and a second end **136** distally located from the handle **106.** As shown best in **FIGS. 1** and **3****,** when the locking element **120** is positioned towards the second end **136** of the arcuate groove **114,** the material collecting equipment **100** is rendered in a parked state. As shown best in **FIG. 4** and **5****,** when the locking element **120** is positioned towards the first end **134** of the arcuate groove **114,** the material collecting equipment **100** is rendered for use in operation.

Yet another aspect of the present disclosure can be visualized by referring again to **FIG. 3** which shows the material collecting equipment **100** in a storage position. The material collecting equipment **100** is stored in an upright position with the wheels **108, 110** and the pair of legs **122, 124** resting against the ground surface to support the material collecting equipment **100.** **FIG. 3** further shows the first plane **A-A'** and the second plane **B-B'**. The ground surface is now represented by a third plane **C-C'.** The ground surface is not perpendicular to the first plane **A-A'** now, as the pair of legs **122, 124** are moved accordingly to provide the material collecting equipment **100** in a stable storage position on the ground surface.

Another aspect of the present disclosure may be visualized by combined reference to **FIGS. 1** and **4****.** **FIG. 1** shows a first plane **A-A'** beneath the material collecting equipment **100** over which the material collecting equipment **100** operates. A second plane **B-B'** perpendicular to the first plane **A-A'** passes through the pair of legs **122, 124.** The material collecting equipment **100** is shown in a non-operative position in which a user may let the material collecting equipment **100** to rest on the ground surface between two operations. Now, referring to **FIG. 4****,** the material collecting equipment **100** is shown in the operative position. In this position, the pair of legs **122, 124** are laterally spaced apart from the second plane **B-B'** by a distance **d.** This allows clearance in front of the pair of legs **122, 124.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Material collecting equipment
- **102**: Implement portion
- **104**: Storage compartment
- **106**: Handle
- **108, 110**: Wheels
- **112**: Fore surface of the implement portion
- **114**: Arcuate groove
- **116**: Stand
- **118**: Bar
- **120**: Locking element
- **122,124**: Legs
- **126**: Knob
- **128**: Stem
- **130**: Locking member
- **132**: Free end of the stem
- **134**: First end of arcuate groove
- **136**: Second end of arcuate groove
- **D**: Distance
- **A-A'**: First plane
- **B-B'**: Second plane
- **C-C'**: Third plane

## Claims

1. A material collecting equipment (**100**) comprising:
a handle (**106**);
an implement portion (**102**) attached to the handle (**106**) and having a pair of wheels (**108**, **110**) rotatably connected to the implement portion (**102**), the implement portion (**102**) having a fore surface (**112**) adapted to define an arcuate groove (**114**) disposed parallel to the pair of wheels (**108**, **110**);
a stand (**116**) slidably coupled to the arcuate groove (**114**), the stand (**116**) comprising:
a bar (**118**) extending partway between the pair of wheels (**108**, **110**); and
a locking element (**120**) disposed on the bar (**118**) to correspond with the arcuate groove (**114**), the locking element (**120**) being selectively operable to adjust a position of the bar (**118**) in relation to the handle (**106**);
**characterized in that**:
at least one leg (**122**, **124**) is connected to the bar (**118**) and disposed away from the implement portion (**102**) to selectively facilitate a storage of the material collecting equipment (**100**) in an upright position, by having the wheels (**108**, **110**) and the at least one leg (**122**, **124**) resting against the ground surface to support the material collection equipment (1**0**0).

2. The material collecting equipment (100) according to claim 1, wherein the at least one leg (122) includes one leg (122).

3. The material collecting equipment (100) according to claim 1, wherein the at least one leg (122) includes a pair of legs (122, 124).

4. The material collecting equipment (100) according to claim 3, **characterized in that**, each leg from the pair of legs (122, 124) has a frusto-conical shape.

5. The material collecting equipment (100) according to claim 3, **characterized in that**, the pair of legs (122, 124) are equidistantly spaced from the locking element (120).

6. The material collecting equipment (100) according to claim 1, **characterized in that**, the locking element (120) comprises: a knob (126),a stem (128) extending from the knob (126) and disposed towards the arcuate groove (114), the stem (128) being threadably engaged with the bar (118), anda locking member (130) attached to a free end (132) of the stem (128) and slidably engaged with the arcuate groove (114) such that when the knob (126) is operably rotated against the bar (118), the locking member (130) abuts with the arcuate groove (114) to prevent relative motion between the stand (116) and the handle (106).

7. The material collecting equipment (100) according to claim 1, **characterized in that**, the arcuate groove (114) has a first end (134) proximal to the handle (106), and a second end (136) distally located from the handle (106).

8. The material collecting equipment (100) according to claim 7, **characterized in that**, when the locking element (120) is positioned towards the first end (134) of the arcuate groove (114), the material collecting equipment (100) is rendered for use in operation.

9. The material collecting equipment (100) according to claim 7, **characterized in that**, when the locking element (120) is positioned towards the second end (136) of the arcuate groove (114), the material collecting equipment (100) is rendered in a parked state.

10. The material collecting equipment (**100**) according to claim 1, **characterized in that**, the material collecting is a lawn mower.

11. The material collecting equipment (**100**) according to claim 1, **characterized in that**, the material collecting equipment (**100**) is a leaf collecting device.

## Patentansprüche

1. Ein Materialsammelgerät (100), das Folgendes umfasst:
einen Griff (106);
einen Werkzeugabschnitt (102), der an dem Griff (106) angebracht ist und ein Paar Räder (108, 110) aufweist, die drehbar mit dem Werkzeugabschnitt (102) verbunden sind, wobei der Werkzeugabschnitt (102) eine vordere Oberfläche (112) aufweist, die dazu geeignet ist, eine bogenförmige Nut (114) zu definieren, die parallel zu dem Paar Räder (108, 110) angeordnet ist;
einen Ständer (116), der verschiebbar mit der bogenförmigen Nut (114) verbunden ist,
wobei der Ständer (116) Folgendes umfasst:
eine Stange (118), die sich teilweise zwischen den beiden Rädern (108, 110) erstreckt; und
ein Verriegelungselement (120), das an der Stange (118) angeordnet ist, um mit der bogenförmigen Nut (114) zu korrespondieren, wobei das Verriegelungselement (120) selektiv betätigbar ist, um eine Position der Stange (118) in Bezug auf den Griff (106) einzustellen;
**dadurch gekennzeichnet, dass**:
mindestens ein Bein (122, 124) mit der Stange (118) verbunden und von dem Werkzeugabschnitt (102) entfernt angeordnet ist, um selektiv eine Lagerung der Materialsammelausrüstung (100) in einer aufrechten Position zu erleichtern, indem die Räder (108, 110) und das mindestens eine Bein (122, 144) auf der Bodenoberfläche ruhen, um die Materialsammelausrüstung (100) zu stützen.

2. Das Materialsammelgerät (100) nach Anspruch 1, wobei das mindestens eine Bein (122) ein Bein (122) umfasst.

3. Das Materialsammelgerät (100) nach Anspruch 1, wobei das mindestens eine Bein (122) ein Paar von Beinen (122, 124) umfasst.

4. Das Materialsammelgerät (100) nach Anspruch 3, **dadurch gekennzeichnet, dass** jedes Bein des Paares von Beinen (122, 124) eine kegelstumpfförmige Form aufweist.

5. Das Materialsammelgerät (100) nach Anspruch 3, **dadurch gekennzeichnet, dass** das Paar von Beinen (122, 124) äquidistant von dem Verriegelungselement (120) beabstandet ist.

6. Das Materialsammelgerät (100) nach Anspruch 1, **dadurch gekennzeichnet, dass** das Verriegelungselement (120) Folgendes umfasst: einen Knopf (126), einen Schaft (128), der sich von dem Knopf (126) erstreckt und in Richtung der bogenförmigen Nut (114) angeordnet ist, wobei der Schaft (128) mit der Stange (118) in Gewindeeingriff steht, und ein Verriegelungselement (130), das an einem freien Ende (132) des Schafts (128) angebracht ist und gleitend mit der bogenförmigen Nut (114) in Eingriff steht, so dass das Verriegelungselement (130) an der bogenförmigen Nut (114) anliegt, wenn der Knopf (126) betriebsmäßig gegen die Stange (118) gedreht wird, um eine relative Bewegung zwischen dem Ständer (116) und dem Griff (106) zu verhindern.

7. Das Materialsammelgerät (100) nach Anspruch 1, **dadurch gekennzeichnet, dass** die bogenförmige Nut (114) ein erstes Ende (134) proximal zum Griff (106) und ein zweites Ende (136) distal vom Griff (106) aufweist.

8. Das Materialsammelgerät (100) nach Anspruch 7, **dadurch gekennzeichnet, dass** das Materialsammelgerät (100) betriebsbereit ist, wenn das Verriegelungselement (120) in Richtung des ersten Endes (134) der bogenförmigen Rille (114) positioniert ist.

9. Das Materialsammelgerät (100) nach Anspruch 7, **dadurch gekennzeichnet, dass**, wenn das Verriegelungselement (120) in Richtung des zweiten Endes (136) der bogenförmigen Nut (114) positioniert ist, das Materialsammelgerät (100) in einen abgestellten Zustand versetzt wird.

10. Das Materialsammelgerät (100) nach Anspruch 1, **dadurch gekennzeichnet, dass** der Materialsammler ein Rasenmäher ist.

11. Das Materialsammelgerät (100) nach Anspruch 1, **dadurch gekennzeichnet, dass** das Materialsammelgerät (100) eine Blattsammelvorrichtung ist.

## Revendications

1. Équipement de collecte de matière (**100**) comprenant :
un manche (**106**) ;
une partie outil (**102**) attachée au manche (**106**) et ayant une paire de roues (**108**, **110**) reliées de manière rotative à la partie outil (**102**), la partie outil (**102**) ayant une surface avant (**112**) conçue pour définir une rainure arquée (**114**) disposée parallèlement à la paire de roues (**108, 110**) ;
un support (**116**) couplé de manière coulissante à la rainure arquée (**114**), le support (**116**) comprenant :
une barre (**118**) s'étendant à mi-chemin entre la paire de roues (**108, 110**) ; et
un élément de verrouillage (**120**) disposé sur la barre (**118**) pour correspondre à la rainure arquée (**114**), l'élément de verrouillage (**120**) étant sélectivement actionnable pour ajuster une position de la barre
(**118**) par rapport au manche (**106**) ;
**caractérisé en ce que** :
au moins une jambe (**122**, **124**) est reliée à la barre (**118**) et disposée loin de la partie outil (**102**) pour sélectivement faciliter un stockage de l'équipement de collecte de matière (**100**) dans une position verticale, en ayant les roues (**108**, **110**) et l'au moins une jambe (**122**, **124**) reposant contre la surface du sol pour soutenir l'équipement de collecte de matière (**100**).

2. Équipement de collecte de matière (**100**) selon la revendication 1, dans lequel l'au moins une jambe (**122**) inclut une jambe (**122**).

3. Équipement de collecte de matière (**100**) selon la revendication 1, dans lequel l'au moins une jambe (**122**) inclut une paire de jambes (**122**, **124**).

4. Équipement de collecte de matière (**100**) selon la revendication 3, **caractérisé en ce que** chaque jambe de la paire de jambes (**122**, **124**) possède une forme tronconique.

5. Équipement de collecte de matière (**100**) selon la revendication 3, **caractérisé en ce que** la paire de jambes (**122**, **124**) sont espacées de manière équidistante par rapport à l'élément de verrouillage (**120**).

6. Équipement de collecte de matière (**100**) selon la revendication 1, **caractérisé en ce que** l'élément de verrouillage (120) comprend : une molette (126), une tige (128) s'étendant à partir de la molette (126) et disposée vers la rainure arquée (114), la tige (128) étant mise en prise par filetage avec la barre (118), et un organe de verrouillage (130) fixé à une extrémité libre (132) de la tige (128) et mis en prise de manière coulissante avec la rainure arquée (114) de sorte que lorsque la molette (126) est tournée de manière fonctionnelle contre la barre (118), l'organe de verrouillage (130) est en butée avec la rainure arquée (114) pour empêcher un mouvement relatif entre le support (**116**) et le manche (**106**).

7. Équipement de collecte de matière (**100**) selon la revendication 1, **caractérisé en ce que** la rainure arquée (**114**) possède une première extrémité (**134**) proximale au manche (**106**), et une seconde extrémité (**136**) située de manière distale par rapport au manche (**106**).

8. Équipement de collecte de matière (**100**) selon la revendication 7, **caractérisé en ce que** lorsque l'élément de verrouillage (**120**) est positionné vers la première extrémité (**134**) de la rainure arquée (**114**), l'équipement de collecte de matière (**100**) se présente utilisable en fonctionnement.

9. Équipement de collecte de matière (**100**) selon la revendication 7, **caractérisé en ce que** lorsque l'élément de verrouillage (**120**) est positionné vers la seconde extrémité (**136**) de la rainure arquée (**114**), l'équipement de collecte de matière (**100**) se présente dans un état stationné.

10. Équipement de collecte de matière (**100**) selon la revendication 1, **caractérisé en ce que** l'équipement de collecte de matière est une tondeuse à gazon.

11. Équipement de collecte de matière (**100**) selon la revendication 1, **caractérisé en ce que** l'équipement de collecte de matière (**100**) est un dispositif de collecte de feuilles.
